# EUROPÄISCHE PATENTSCHRIFT

(11) **EP 4 052 007 B1**
(45) Veröffentlichungstag und Bekanntmachung des Hinweises auf die Patenterteilung: **26.02.2025**
(21) Anmeldenummer: 20800841.7
(22) Anmeldetag: 30.10.2020
(51) Int. Cl.: G01M 13/003, F15B 19/00, F15B 20/00, F16K 37/00, F16K 31/126, G05B 19/042

(54) **FESTLEGEN VON ABBRUCHKRITERIEN FÜR EINEN TEILHUBTEST AN EINEM FLUIDISCH ANGETRIEBENEN SICHERHEITSVENTIL SOWIE BESTIMMEN DER FUNKTIONSFÄHIGKEIT EINES FLUIDISCH ANGETRIEBENEN SICHERHEITSVENTILS**
ESTABLISHING TERMINATION CRITERIA FOR A PARTIAL-STROKE TEST OF A FLUIDICALLY DRIVEN SAFETY VALVE, AND DETERMINING THE WORKING ORDER OF A FLUIDICALLY DRIVEN SAFETY VALVE
ÉTABLISSEMENT DE CRITÈRES DE FIN D'UN TEST DE COURSE PARTIELLE D'UNE SOUPAPE DE SÉCURITÉ À COMMANDE FLUIDIQUE, ET DÉTERMINATION DE L'ÉTAT DE MARCHE D'UNE SOUPAPE DE SÉCURITÉ À COMMANDE FLUIDIQUE

(30) Priorität: 30.10.2019 DE 102019129368
(43) Veröffentlichungstag der Anmeldung: 07.09.2022
(73) Patentinhaber: SAMSON AKTIENGESELLSCHAFT, 60314 Frankfurt am Main (DE)
(72) Erfinder: WAGNER-STÜRZ, David, 64367 Mühltal (DE)
(74) Vertreter: Köllner, Malte
(86) Internationale Anmeldenummer: PCT/EP2020/080530
(87) Internationale Veröffentlichungsnummer: WO 2021/084078

(56) Entgegenhaltungen:
- CN-A- 110 792 844
- DE-T2- 60 020 559
- US-A1- 2002 145 515
- US-A1- 2012 139 725

## Beschreibung

### Gebiet der Erfindung

Die Erfindung betrifft ein Verfahren zum Festlegen von Abbruchkriterien für einen Teilhubtest an einem fluidisch angetriebenen Sicherheitsventil. Diese Abbruchkriterien legen fest, ob solch ein Test als bestanden oder als nicht bestanden gewertet wird und haben daher entscheidenden Einfluss auf die Wartungssituation von fluidisch angetriebenen Sicherheitsventilen.

Ferner betrifft die Erfindung ein Verfahren zum Bestimmen der Funktionsfähigkeit eines fluidisch angetriebenen Sicherheitsventils.

Verharrt ein Ventilglied lange in einer Position, kann aufgrund von Ablagerungen, Korrosion und oder Verklebungen die Haftreibung und damit die zur Bewegung des Ventilglieds erforderliche Losbrechkraft stark erhöht sein. Die Antriebsenergie reicht dann unter Umständen nicht mehr aus, um das Ventilglied sicher zu bewegen.

Bei Sicherheitsventilen muss aber sichergestellt werden, dass die Antriebsenergie unter allen Umständen ausreicht, um das Ventilglied in eine Sicherheitsposition zu verfahren. Zur Sicherstellung, dass das Ventilglied sich auch nach langer Ruhephase gegen die erhöhten Reibungskräfte bewegen lässt, wird deshalb regelmäßig ein Teilhubtest durchgeführt. Mit einem solchen Test kann die grundlegende Bewegbarkeit des Ventilgliedes geprüft werden.

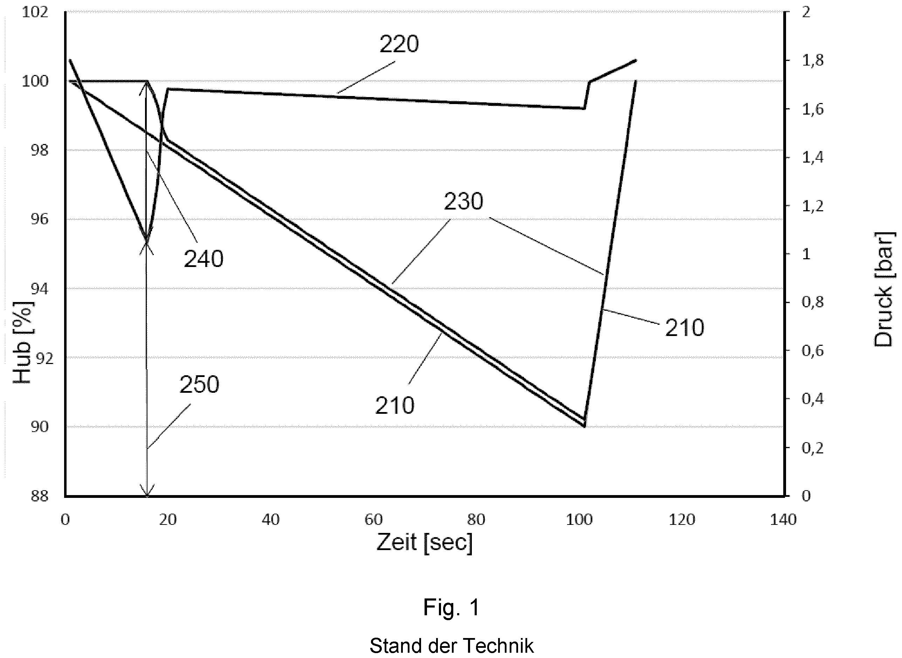

Der typische Verlauf eines Teilhubtests kann anhand von Fig. 1 verstanden werden. Dort sind der relative Hub des Ventilglieds und der Druck über der Zeit während eines Teilhubtests an einem Sicherheitsventil dargestellt. Das Sicherheitsventil hat einen einfachwirkenden, pneumatischen Antrieb mit Federrückstellung. Die Sicherheitsstellung ist stromlos geschlossen. Der Sollwert 210 zeigt den idealen reibungsfreien Hubverlauf beim Schließen des Ventils beim gleichmäßigen Entlüften. Der Druck wird reduziert und die Federkräfte des Antriebs werden freigesetzt und bewegen das Ventilglied in Richtung der Schließstellung. Der Ist-Druckverlauf 220 zeigt zunächst ein deutliches Absenken des Drucks, bevor sich der Hub (Ist-Hub) 230 verändert. Hier zeigt sich das Losbrechen des Ventilglieds aus seiner geöffneten Stellung, in der es evtl. bereits verklebt war, also der Haftreibung unterlag. Die Differenz zwischen dem anfänglichen, maximalen Druck und dem Druck im Moment des Losbrechens, wird als Losbrechdruck 240 bezeichnet. Der Losbrechdruck ist der Druck bzw. die Kraft, die ausreicht, um die Haftreibung zu überwinden und das Ventil zu lösen. Der Druck im Antriebsfluid im Moment des Losbrechens verbleibt als Reserve 250, sofern er größer 0 bar ist. Falls nicht, kann das Sicherheitsventil seine Funktion nicht mehr erfüllen. Der Druck wird nach dem Losbrechen nachgeregelt, also wieder erhöht, damit ein Überschwingen vermieden oder reduziert wird. Nach dem Überwinden der Haftreibung und der beschleunigten Hubbewegung findet ein gleichmäßiges Entlüften des Antriebs statt (langsame Druckreduktion), bis 90% des Hubs erreicht ist. Die Ist-Hub-Kurve 230 verläuft im Bereich der Gleitreibung etwa linear und parallel der Soll-Hub-Kurve 210, um den Betrag der Gleitreibung parallel verschoben. Nach Erreichen der 90% wird der Druck im Antrieb wieder erhöht, damit das Ventilglied gegen die Federkräfte wieder voll öffnet. Der Teilhubtest ist abgeschlossen.

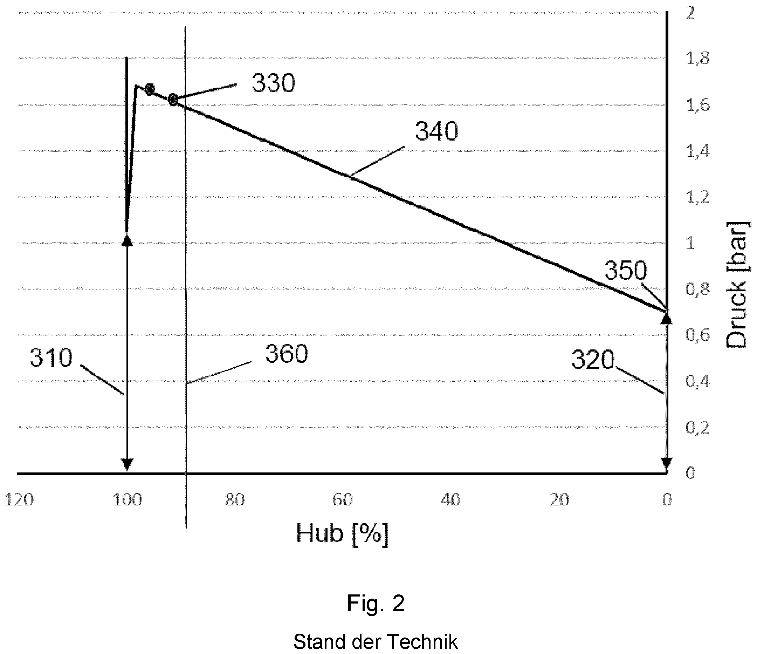

Durch Elimination der Zeit und Auftragen des Drucks 220 über dem Hub 230 entsteht die Hub-Druck-Kurve der Fig. 2. Die Schließdruck-Reserve 320 ist die Druckreserve, die verbleibt, nachdem das Sicherheitsventil geschlossen wurde. Die Schließdruck-Reserve 320, die sich bei gleichbleibender Bewegung einstellt (Gleitreibung), kann anhand von Fig. 2 ermittelt werden. Hierfür wird die Hub-Druck-Kurve gemäß Fig. 2 weiter bis zur Schließstellung (Hub = 0) extrapoliert.

### Stand der Technik

Eine Stelleinrichtung für ein Auf-Zu-Ventil mit pneumatischem Antrieb, bei der ein Stellungsregler vorhanden ist, der eine Routine zu Durchführung eines Teilhubtests enthält, ist in der Druckschrift WO 2009/013205 A1 beschrieben.

In der Veröffentlichung DE 10 2011 052 901 A1 wird zudem beschrieben, wie die Antriebsenergie zur Durchführung eines Teilhubtests so geregelt werden kann, dass ein übermäßiges Überschwingen nach der Überwindung der Haftreibung verhindert wird.

Während eines Teilhubtests wird eine Hub-Druck-Kurve aufgenommen. Anhand der Hub-Druck-Kurve kann z.B. eine Druckreserve eines Antriebs ermittelt werden. In der Veröffentlichung DE 10 2018 103 324 B3 ist ein solches Vorgehen beschrieben. Die Druckreserve kann Aufschluss darüber geben, ob das Ventil im Sicherheitsfall zuverlässig schließt. Das Dokument US 2002/0145515 A1 offenbart ein System zum manuellen Ausführen einer Notabschaltungs-Prüfung und zum Sammeln von Daten in einer Prozess-Steuerungs-Umgebung.

Um die Kriterien festzulegen, bei denen ein Teilhubtest als nicht bestanden gewertet wird, ist es üblich, folgendermaßen vorzugehen:
Bei einem voll funktionsfähigen Stellventil wird eine Referenzkurve aufgenommen. Anhand von Erfahrungen ist bekannt, welche Abweichungen einer Hub-Zeit-Kurve oder Hub-Druck-Kurve gerade noch für einen sicheren Betrieb sorgen. Diese Werte werden als Abbruchgrenzwerte permanent abgespeichert und gelten für den gesamten Verlauf der Hub-Druck-Kurve und für alle derartigen Ventile.

Falls die Positionssteuerung bzw. -regelung des Stellventils eine Proportionalregelung (auch als P-Regelung bezeichnet) ist, dienen die Regelabweichung (Differenz zur Soll-Position) und der Druck als Abbruchkriterien. Beim langsamen Entlüften des Druckraumes während des Teilhubtests wird ermittelt, ob die Antriebskraft der Federn ausreicht, um das Ventilglied wie vorgesehen loszubrechen bzw. zu bewegen. Hierfür wird ein Drucksensor oder der Druck anhand des IP-Wandler-Signals benötigt. Wenn z.B. die Regelabweichung größer 3-5% oder der Druck im Antrieb des Ventils kleiner 2,5 bar beträgt, gilt der Test als fehlerhaft. Das heißt, die Endtestposition muss bei einem Druck von größer 2,5 bar erreicht werden können, um den Test positiv zu absolvieren. Dabei darf die Endposition nicht mehr als 3-5% von der Endposition in der Referenzkurve abweichen. Diese festen Abbruchkriterien sind für sämtliche Testabschnitte und für alle Zeiten gleich.

Diese festen Abbruchgrenzkriterien führen dazu, dass bei einem Abbruch nicht klar ist, wie groß die Veränderung gegenüber dem vorher (bei dem letzten bestandenen Teilhubtest) gemessenen, funktionssicheren Zustand ist. Veränderungen des physikalischen Verhaltens, die durch Störgrößen wie Stillstandzeit, Mediumsdruck und/oder Mediumstemperatur verursacht werden, aber die Funktionsfähigkeit des Sicherheitsventils nicht grundsätzlich verhindern, werden ebenfalls nicht berücksichtigt.

### Aufgabe

Aufgabe der Erfindung ist es, ein Verfahren anzugeben, das bessere Abbruchkriterien für einen Teilhubtest liefert, sowie ein Verfahren anzugeben, mit dessen Hilfe die Funktionsfähigkeit eines fluidisch angetriebenen Sicherheitsventils zuverlässiger bestimmt werden kann.

### Lösung

Diese Aufgabe wird durch den Gegenstand des unabhängigen Anspruchs 1 gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Festlegen von Abbruchkriterien für einen Teilhubtest an einem fluidisch angetriebenen Sicherheitsventil mit einem Ventilglied und einer Feder-Rückstellung vorgeschlagen. Das Ventilglied soll bei einem vollständigen Abfall des Drucks des Antriebsfluids durch die Feder-Rückstellung in eine Sicherheitsstellung bewegt werden, wobei der Druck des Antriebsfluids gegen die Feder wirkt. Das Sicherheitsventil weist Mittel zum Bestimmen des Drucks des Antriebsfluids und Mittel zum Bestimmen der Stellung des Ventilglieds auf. Das Verfahren umfasst die folgenden Schritte:
a) Ein erster Teilhubtest wird an dem Sicherheitsventil mittels Variation des Drucks im Antriebsfluid durchgeführt, wobei dieser Teilhubtest zu einem Zeitpunkt durchgeführt wird, an dem das Sicherheitsventil funktionsfähig ist, z.B. bei der Inbetriebnahme des Sicherheitsventils.
b) Zumindest die Stellung des Ventilglieds und der Druck im Antriebsfluid werden während des ersten Teilhubtests aufgezeichnet.
c) Aus den Aufzeichnungen wird eine erste Relation abgeleitet, die die Stellung des Ventilglieds und/oder die Zeit und/oder den Druck des Antriebsfluids und/oder einen weiteren, während des ersten Teilhubtests aufgezeichneten Parameter zueinander in Beziehung setzt. Dabei kann es sich z.B. um eine Hub-Druck-Kurve handeln.
d) Diese Relation wird als Referenzkurve für dieses Sicherheitsventil im funktionsfähigen Zustand definiert und gespeichert.
e) Mindestens eine zweite Relation wird definiert, die einen vorgegebenen Abstand zur Referenzkurve aufweist. Bei dieser mindestens einen zweiten Relation kann es sich z.B. um ein Toleranzband um die Hub-Druck-Kurve handeln.
f) Als Abbruchkriterium für einen später durchzuführenden, wiederholten Teilhubtest, z.B. bei zukünftiger regelmäßiger Überprüfung desselben Sicherheitsventils, wird festgelegt: Wird der wiederholte Teilhubtest an demselben Ventil durchgeführt, werden dabei die gleichen Daten aufgezeichnet, und wird aus den Daten auf die gleiche Weise wie bei der Referenzkurve eine dritte Relation abgeleitet, so gilt der wiederholte Teilhubtest als nicht bestanden, wenn die dritte Relation an mindestens einem Punkt einen größeren Abstand zur Referenzkurve hat als die zweite Relation.

Auf diese Weise lassen sich Abbruchkriterien für zukünftige Teilhubtests an dem jeweiligen konkreten Sicherheitsventil festlegen, die flexibel die Eigenschaften des Ventils berücksichtigen. Ob das Ventil den Teilhubtest besteht oder nicht, hängt also stärker von Veränderungen am Wartungszustand des Ventils ab und weniger davon, wie sehr sich dieses spezielle Ventil von irgendeinem idealen Ventil unterscheidet.

Das Sicherheitsventil weist eine Stellungsregelung auf, die beim Teilhubtest verwendet wird. Diese Stellungsregelung ist eine Proportional-Regelung mit einer Regelabweichung. Bei der beanspruchten Ausführungsform des Verfahrens wird als erste Relation die Summe aus der Soll-Kurve für die Stellungsregelung des Ventilglieds und der Regelabweichung verwendet.

Eine besonders einfache Gestaltung der Abbruchkriterien für den Teilhubtest erhält man, wenn die zweite Relation einen festen Abstand von beispielsweise 2% zur Referenzkurve aufweist. Der Einfachheit halber kann dieser Abstand sowohl nach oben als auch nach unten gelten.

Der spezifischen Situation des betrachteten Ventils entsprechen die Abbruchkriterien eher, wenn die zweite Relation für verschiedene Stellungen des Ventilglieds unterschiedliche Abstände zur Referenzkurve aufweist.

Dabei ist es besonders zweckmäßig, wenn die unterschiedlichen Abstände der zweiten Relation zur Referenzkurve jeweils für unterschiedliche Bereiche des Bewegungsverlaufs des Ventilkegels bei einem Teilhubtest gelten. Typischerweise wird daher der Verlauf in vier Bereiche unterteilt:
- den Bereich des Losbrechens, der von der Überwindung der Haftreibung dominiert wird;
- den von der Gleitreibung dominierten Bereich, in dem das Ventilglied ohne weitere Besonderheiten verfährt;
- den Bereich der Bewegungsumkehrung, wenn das Ventilglied 10% seines Schließweges erreicht hat, der von Hysterese bestimmt wird;
- sowie den wiederum von der Gleitreibung dominierten Bereich der Rückkehr des Ventilglieds in die vollständig geöffnete Position.

Diese Unterteilung ist zweckmäßig, da in bestimmten Bereichen höhere Abweichungen vom idealen Verlauf eines Teilhubtests auftreten können, ohne die Funktionsfähigkeit des Sicherheitsventils in Frage zu stellen, während in anderen Bereichen derart hohe Abweichungen zwingend zu Abbruch und Nichtbestehen führen müssen. So ist es z.B. ohne weiteres möglich, dass beim Losbrechen eine relativ hohe Druckabsenkung erforderlich ist, so dass das Ventilglied der Referenzkurve stark hinterherläuft. Dies ist nicht kritisch, wenn das Ventilglied beim weiteren Verfahren sich der Referenzkurve wieder stärker annähert. Daher kann in einer typischen Anwendung im Bereich des Losbrechens eine höhere Abweichung gestattet werden.

Bei bestimmten Ventiltypen oder Anlagenkonfigurationen kann es zudem von Vorteil sein, die unterschiedlichen Abstände und Bereiche derart festzulegen, dass Stick-Slip-Effekte berücksichtigt werden. Diese treten typischerweise unmittelbar nach dem Beginn der Bewegung auf und äußern sich in einem Verlauf des Hubs über der Zeit, der Ähnlichkeit mit einer Treppenfunktion hat. Wenn das Ventilglied haftet (Stick), ändert sich dessen Position nicht. Danach erfolgt eine sprunghafte Korrektur der Position (Slip). Die Höhe dieser Stufen kann als Kriterium zur Gestaltung der mindestens einen zweiten Relation herangezogen werden. In dem Bereich, in dem diese Stufen auftreten, wird man den Abstand der mindestens einen zweiten Relation von der Referenzkurve größer gestalten. Dabei ist insbesondere vorstellbar, dass der Toleranzbereich oberhalb der Referenzkurve unter diesen Bedingungen größer gewählt werden muss als der Toleranzbereich unterhalb der Referenzkurve.

Vorzugsweise weist die zweite Relation nach oben und nach unten jeweils unterschiedliche Abstände zur Referenzkurve auf. Dies ist insbesondere vorteilhaft, wenn es sich bei der Referenzkurve um eine Hub-Druck-Kurve handelt. In diesem Fall sind gegenüber der Referenzkurve typischerweise größere Abweichungen nach oben als nach unten zu erwarten, da bei normalen Verschleißerscheinungen eine größere Absenkung des Antriebsdrucks benötigt wird, als bei einem Ventil im Idealzustand.

Bei einer besonders bevorzugten Weiterbildung des Verfahrens werden die Abstände der zweiten Relation zur Referenzkurve in Abhängigkeit von aktuellen Bedingungen am Ventil und/oder an der Anlage zum Zeitpunkt der Durchführung des Teilhubtests dynamisch festgelegt. Dadurch können Einflüsse wie z.B. Stillstandzeit, Temperaturen, Prozessdruck berücksichtigt werden, die mit der grundsätzlichen Funktionsfähigkeit des Ventils nicht oder kaum zusammenhängen. Beispielsweise ist es möglich, nach einer langen Stillstandzeit des Ventils höhere Abweichungen zuzulassen, und entsprechend in Fällen, in denen das Ventil kurz vor dem Teilhubtest bewegt wurde, strengere Kriterien anzuwenden.

Günstig ist zudem, wenn der Teilhubtest zusätzlich als nicht bestanden gilt, wenn der Druck im Antriebsfluid einen vorgegebenen Wert unterschreitet. Dabei ist es grundsätzlich möglich, für den Losbrechdruck und/oder den Druck am Umkehrpunkt der Bewegung des Teilhubtests und/oder den Druck während des gesamten Testverlaufs Grenzen vorzugeben.

Zur Lösung der Aufgabe wird weiterhin ein Verfahren zum Bestimmen der Funktionsfähigkeit eines fluidisch angetriebenen Sicherheitsventils mit einem Ventilglied und einer Feder-Rückstellung vorgeschlagen. Das Ventilglied soll bei einem vollständigen Abfall des Drucks des Antriebsfluids durch die Feder-Rückstellung in eine Sicherheitsstellung bewegt werden; wobei der Druck des Antriebsfluids gegen die Feder wirkt. Das Sicherheitsventil weist Mittel zum Bestimmen des Drucks des Antriebsfluids und Mittel zum Bestimmen der Stellung des Ventilglieds auf. Das Verfahren umfasst die folgenden Schritte:
- Es wird ein Teilhubtest an dem Sicherheitsventil durchgeführt.
- Ein Verfahren, wie es weiter oben beschrieben wurde, wurde zu einem früheren Zeitpunkt an demselben Sicherheitsventil durchgeführt.
- Anhand der mit diesem weiter oben beschriebenen Verfahren definierten Abbruchkriterien für dieses Ventil wird entschieden, ob das Ventil den Teilhubtest bestanden oder nicht bestanden hat und weiterhin als funktionsfähig eingestuft werden kann oder nicht.

Durch dieses Verfahren lässt sich mit höherer Genauigkeit als sonst üblich ermitteln, ob ein Sicherheitsventil noch funktionsfähig ist oder nicht. Insbesondere passt das Ergebnis besser zu der Situation des speziellen betrachteten Ventils, und daraus, welches Kriterium im Falle des Nichtbestehens verletzt wurde, lassen sich unter Umständen sogar Rückschlüsse auf die Art der Beeinträchtigung des Ventils ziehen. Sowohl die Wartungszyklen des Ventils als auch der Arbeitsumfang der Wartungsmaßnahmen lassen sich auf diese Weise optimieren.

Die Aufgabe wird zudem dadurch gelöst, dass bei einem Verfahren, wie es weiter oben beschrieben wurde, die Verfahrensschritte als Programmcode formuliert sind, mit dem das Verfahren auf mindestens einem Computer ablaufen kann.

Ferner wird die Aufgabe gelöst durch ein Computerprogramm, welches ausführbare Instruktionen beinhaltet, welche bei Ausführung auf einer Recheneinheit, einem Mikrocontroller, DSP, FPGA oder Computer oder auf einer Mehrzahl davon in einem Netzwerk das Verfahren nach einem der vorhergehenden Verfahrensansprüche ausführt.

Weiterhin wird die Aufgabe gelöst durch ein Computerprogramm mit Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Insbesondere können die Programmcode-Mittel auf einem computerlesbaren Datenträger gespeicherte Instruktionen sein.

Außerdem wird die Aufgabe gelöst durch einen Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das erfindungsgemäße Verfahren in einer seiner Ausgestaltungen ausführen kann.

Auch wird die Aufgabe gelöst durch ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird die Aufgabe gelöst durch ein moduliertes Datensignal, welches von einer Recheneinheit, einem Mikrocontroller, DSP, FPGA oder Computer oder von einer Mehrzahl davon in einem Netzwerk ausführbare Instruktionen zum Ausführen des erfindungsgemäßen Verfahrens in einer seiner Ausgestaltungen enthält.

Als Computersystem zum Ausführen des Verfahrens kommen sowohl ein einzelner Computer oder Mikrocontroller, DSPs oder FPGAs in Betracht, als auch ein Netzwerk von Mikrocontrollern, DSPs, FPGAs oder Rechnern, beispielsweise ein hausinternes, geschlossenes Netz, oder auch Rechner, die über das Internet miteinander verbunden sind. Ferner kann das Computersystem durch eine Client-Server-Konstellation realisiert sein, wobei Teile der Erfindung auf dem Server, andere auf einem Client ablaufen.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Einige Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine Hub-Zeit- und die zugehörige Druck-Zeit-Kurve während eines Teilhubtests an einem typischen Sicherheitsventil;
- Fig. 2: eine entsprechende Hub-Druck-Kurve;
- Fig. 3: Hub-Zeit-Kurven für zwei mögliche Verläufe bei einem Teilhubtest, einschließlich der zugehörigen Sollwertkurve;
- Fig. 4: Toleranzbänder zu den Hub-Zeit-Kurven aus Fig. 3;
- Fig. 5: bereichsabhängige Toleranzbänder zu den Hub-Zeit-Kurven aus Fig. 3; und
- Fig. 6: eine beispielhafte Hub-Zeit-Kurve von einem Teilhubtest bei einer Stellklappe.

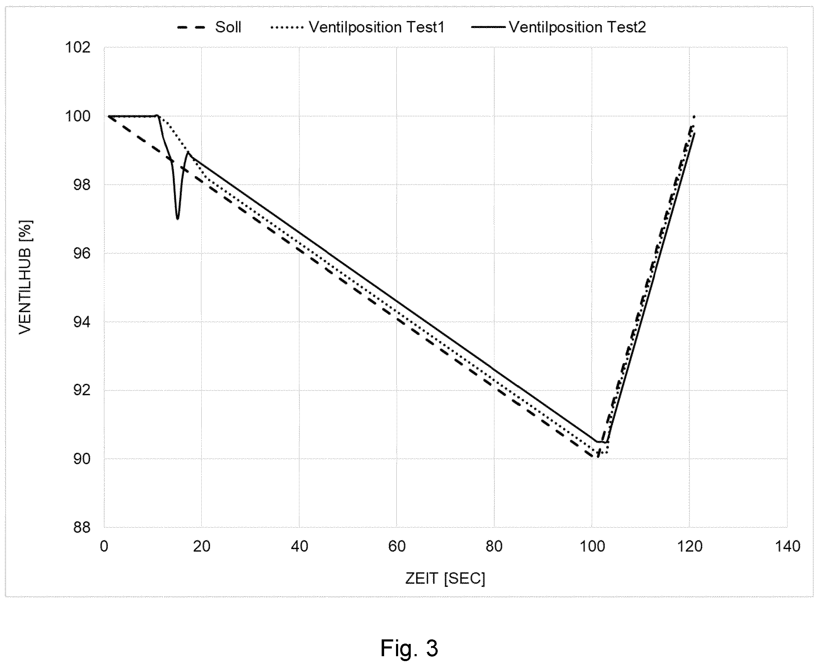

Fig. 3 zeigt Kurvenverläufe der Hub-Zeit-Kurven von typischen Teilhubtests bei Stellventilen. Die Sollkurve (gestrichelte Linie) senkt den Ventilhub langsam von 100%, also vollständig geöffnet, auf 90% ab, um das Ventil danach wieder vollständig freizugeben. Die Rückkehr in die geöffnete Position kann dabei schneller verlaufen. Test 1 (gepunktete Linie) und Test 2 (durchgezogene Linie) stellen mögliche reale Verläufe bei einem solchen Teilhubtest dar (also Ist-Kurven). Im Falle von Test 2 ist das Losbrechmoment höher, so dass der Antrieb eine größere Kraft aufbringen muss, welche dazu führt, dass das Ventilglied bei Aufnahme der Bewegung durchschwingt, bis die Regelung diese Bewegung wieder einfängt. Test 2 zeigt auch insgesamt eine größere Abweichung von der Soll-Kurve.

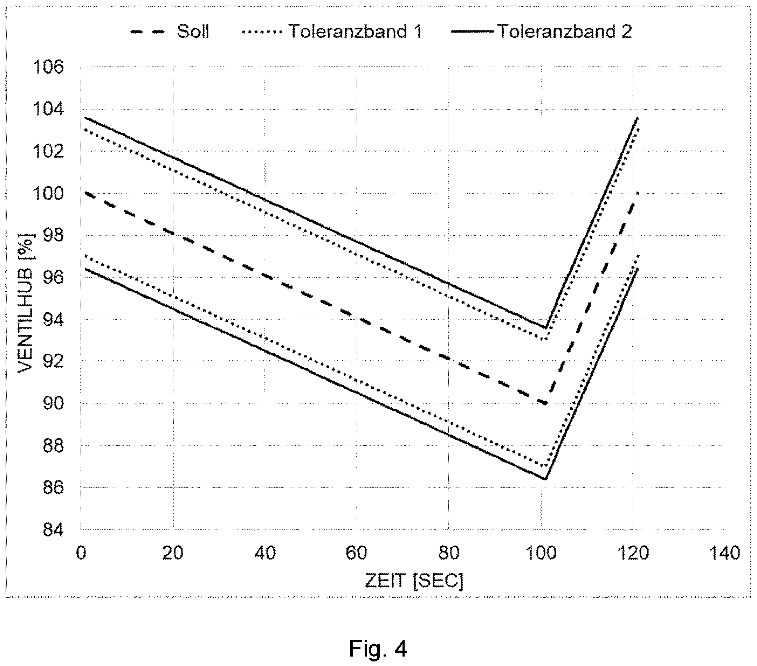

Um das der Erfindung zugrunde liegende Problem zu lösen, müssen die Abbruchkriterien für einen Teilhubtest angepasst werden, so dass sie jeweils auf die Situation von z.B. Test 1 oder Test 2 passen. Hierzu wird eine Referenzkurve im neuwertigen bzw. technisch ordnungsgemäßen Zustand des Ventils aufgenommen und die Abbruchkriterien für dieses Ventil werden anhand dieser Referenzkurve bestimmt. Für den Fall einer reinen Proportionalregelung, wie sie bei Stellungsreglern für Ventile allgemein üblich ist, kann z.B. die Regelabweichung (Differenz aus Soll- und Ist-Position des Ventilglieds) betrachtet werden. Zu der bei der Referenzmessung aufgetretenen maximalen Regelabweichung (von z.B. 1% oder 4%) wird dann eine Toleranz (von typischerweise 2%) addiert, so dass man als Abbruchkriterien eine zulässige maximale Regelabweichung (von z.B. 3% oder 6%) erhält. Diese allgemeinen Bedingungen bilden in einem Hub-Zeit-Diagramm Toleranzbänder um die Sollwertkurve. Solche Toleranzbänder sind beispielhaft in Fig. 4 dargestellt. Auf der Grundlage von Test 2 (als Referenzfall) ergibt sich ein breiteres Toleranzband als auf der Grundlage von Test 1, da bei Test 2 erkennbar schon eine größere Regelabweichung auftritt, die den noch funktionsfähigen Normalfall für das Ventil darstellt.

Es ist selbstverständlich möglich, diese Kriterien für Abweichungen nach oben und nach unten unterschiedlich zu gestalten (nicht dargestellt).

Entsprechend kann in Bezug auf den Druck im Antriebssystem des Sicherheitsventils verfahren werden. Bei Unterschreitung eines vorgegebenen Druckwerts wird ein Teilhubtest abgebrochen. Beispielsweise könnte bei Test 1 ein minimaler Antriebsdruck von 1900 mbar und bei Test 2 ein minimaler Antriebsdruck von 1500 mbar erreicht werden. Unter der Annahme, dass dies dem voll funktionsfähigen Zustand des jeweiligen Ventils entspricht, kann beispielsweise für das Ventil von Test 1 eine Druckabbruchgrenze von 1500 mbar und für das Ventil von Test 2 eine Druckabbruchgrenze von 1100 mbar definiert werden, wenn man eine maximal zulässige Druckabweichung von 400 mbar gegenüber dem Normalzustand annimmt. Die Druckbedingung ist für das Ventil von Test 1 also deutlich strenger als für das Ventil von Test 2.

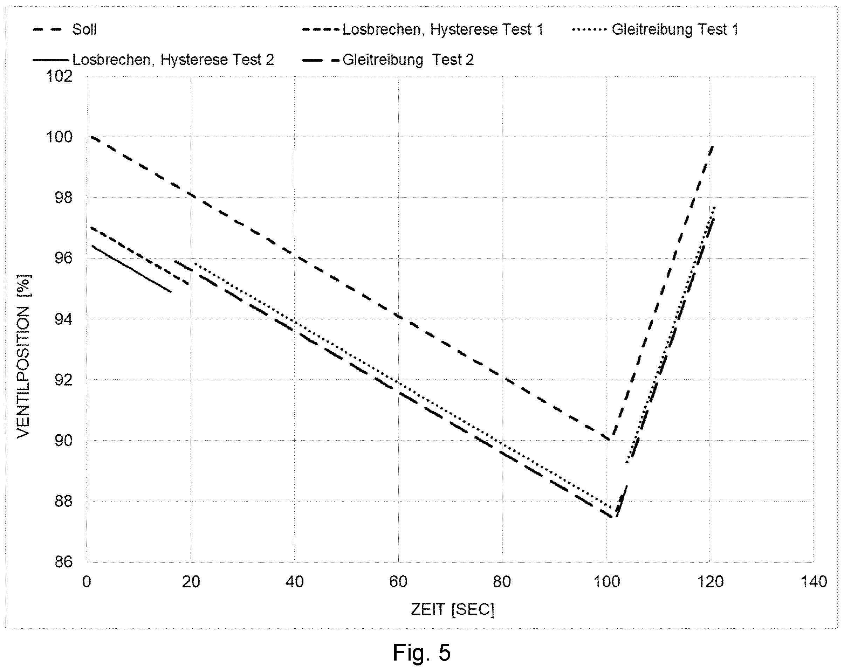

Um besser situationsbezogene Abbruchkriterien für den Teilhubtest zu erhalten, können diese Kriterien auch bereichsabhängig gestaltet werden. Dadurch können Aussagen über den genauen Testverlauf und ggf. über Veränderungen an den Armaturen getroffen und eine differenzierte Diagnose durchgeführt werden. So gelten zum Beispiel im Bereich des Losbrechens andere Abbruchkriterien als im Bereich des gleichmäßigen Verfahrens. Insgesamt können 4 oder 5 Bereiche - Losbrechmoment, Gleitreibung, Hysterese bei der Richtungsumkehr, Gleitreibung beim Zurückfahren und ggf. Stick Slip-Effekt - festgelegt werden. Dies ist in Fig. 5 zu sehen. Dort ist wieder die Sollkurve gestrichelt dargestellt. Von den Abbruchkriterien sind der übersichtlicheren Darstellung halber nur die unteren Toleranzbänder dargestellt. Die Grenzen für das Ventil von Test 1 sind als gepunktete Linien (Bereich der Gleitreibung, vor und zurück) und als fein gestrichelte Linien (Bereich des Losbrechens und Hysterese bei der Bewegungsumkehr) gezeichnet, die Grenzen für das Ventil von Test 2 als grob gestrichelte (Bereich der Gleitreibung, vor und zurück) bzw. durchgezogene Linien (Bereich des Losbrechens und Hysterese bei der Bewegungsumkehr) gezeichnet.

Als Losbrechen wird der Punkt bezeichnet, bei welchem die Haftreibung gerade überwunden wird und das Ventilglied sich zu bewegen beginnt. Hier erfolgt der Übergang in die Gleitreibung. Bei einem typischen Ventil wird z.B. durch Ablagerungen zwischen Ventilstange und Dichtungssitz oder durch erhöhte Reibung in der Ventilgarnitur das Losbrechmoment mit der Zeit erhöht. Dies kann sogar zu einem Abbruch des Teilhubtests führen, wenn z.B. die Toleranz der Regelabweichung über- oder der minimale Druck unterschritten wird. Bei einem Abbruch in diesem Bereich kann deshalb auf eine Änderung der Haftreibung aufgrund von dauerhaften Veränderungen an der Mechanik des Aufbaus (z.B. veränderte Packungsreibung und oder Änderungen, die nur beim erstmaligen Bewegen nach einer längeren Stillstandzeit auftreten) geschlossen werden. Dies kann beispielsweise das Ausharzen von Öl sein. Entsprechende Wartungsmaßnahmen lassen sich hier vorsehen.

Als Gleitreibung wird bewegungsrichtungsabhängige konstante Reibung bei Gleitvorgängen bezeichnet. Dabei tritt immer eine konstante Reibkraft auf, welche der relativen Bewegung von zwei sich berührenden Oberflächen entgegenwirkt und unabhängig von der Geschwindigkeit der Relativbewegung ist. Bei einem Ventil bewirken Packungen (z.B. aus Graphit oder PTFE), die gegen eindringenden Schmutz oder gegen einen einwirkenden Flüssigkeits- oder Dampfdruck verwendet werden, eine relativ hohe Gleitreibung. Dies ist darauf zurückzuführen, dass die Packungen mittels Schrauben oder Federn verpresst werden und somit eine große Berührfläche aufweisen. Bei einem Testabbruch in diesem Bereich kann auf Veränderungen der Gleitreibung oder Veränderungen der Federkonstante der Antriebsfedern geschlossen werden.

Die Hysterese bezeichnet hier entweder die Differenz der Sollwertänderung (nach einer Sollwertumkehrung), bis eine Positionsänderung des Ventils erfolgt, oder die Druckänderung, die nach einer Sollwertänderung benötigt wird, bis eine Bewegung des Ventils stattfindet. Die Ursache für diese Hysterese ist vor allem die mechanische (Haft-)Reibung im Ventil (insbesondere z.B. bei Kugelhahnventilen) und/oder der Einfluss von Strömungskräften (insbesondere z.B. bei Stellklappen). Bei einem Testabbruch im Bereich der Hysterese kann auf eine dauerhaft veränderte Haftreibung aufgrund von mechanischen Veränderungen am Aufbau (z.B. geänderte Packungsreibung) geschlossen werden. Betrachtet man nun die veränderte Reibung im Bereich Losbrechmoment und im Bereich Hysterese, so kann das Moment bestimmt werden, welches beispielsweise aufgrund einer Stillstandzeit aufgetreten ist.

Gleitreibung bei Rücklauf: Nachdem die Hysterese überwunden ist, geht das Ventilglied wieder von der Haftreibung in die Gleitreibung über. Beim Zurückfahren in die Ausgangsposition wird meistens schneller verfahren, um die Dauer des Teilhubtests möglichst kurz zu gestalten.

Diese Bereiche sind in Fig. 5 dargestellt, insbesondere auch die unterschiedliche Ausbildung der entsprechenden Toleranzbänder für die Ventile von Test 1 und Test 2.

Wenn die Haftreibung zwischen zwei Festkörpern größer ist als die Gleitreibung, kann der Stick-Slip-Effekt auftreten. Bedingt durch die Dichtungen an Kolbenstange und Kolben treten an Pneumatik- oder Hydraulikzylindern vergleichsweise stark ausgeprägte Haft- und Gleitreibung auf. Sobald sich der Kolben in Bewegung setzt, entspannt sich die Luft. Deshalb ist die Wirkung des Stick-Slip-Effekts vorwiegend bei langsamen Bewegungen, die lediglich mit Hilfe kleiner Differenzialdrücke gefahren werden können, besonders stark ausgeprägt. Der Stick-Slip-Effekt tritt auch bei dynamisch belasteten Dichtungen auf, bei denen infolge hoher Druckbelastung, höherer Temperaturen und längerer Stillstandzeiten das Lösen vom Dichtsitz erschwert wird. Bei einem Testabbruch über das Abbruchkriterium Regelabweichung der Position oder einem Druckabbruch in diesem Bereich kann auf eine Veränderung des Verhältnisses von Gleit- zu Haftreibung geschlossen werden. Der Bereich für das Auftreten von Stick-Slip-Effekten ist hier nicht dargestellt - typischerweise treten diese kurz nach Bewegungsbeginn des Ventilglieds auf.

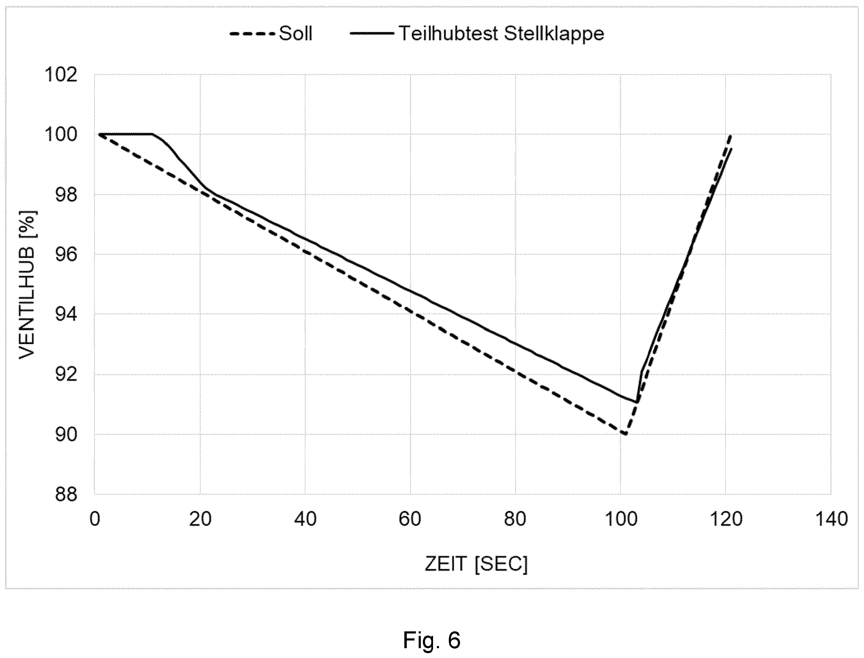

In Fig. 6 ist der typische Verlauf einer Hub-Zeit-Kurve eines Teilhubtests für ein Sicherheitsventil vom Typ Stellklappe dargestellt (durchgezogene Linie), wiederum zusammen mit der zugehörigen Sollwertkurve (gestrichelte Linie). Es ist zu erkennen, dass hier grundsätzlich dieselben Effekte auftreten, wie bei einem Stellventil, und dass daher das erfindungsgemäße Vorgehen auch in diesem Fall sinnvoll ist.

Zweckmäßigerweise kann außerdem eine dynamische Anpassung der Abbruchkriterien anhand der jeweils aktuellen Prozessbedingungen vorgenommen werden. So kann zum Beispiel die aktuelle Stillstandzeit, Medium-Temperatur oder auch der Prozessdruck in die Abbruchkriterien für einen Teilhubtest eingerechnet werden. Beispielsweise können die Kriterien im Bereich des Losbrechens nach längerer Stillstandzeit großzügiger ausfallen, während sie strenger sein müssen, wenn das Ventil erst vor kurzer Zeit bewegt wurde, da eine Abweichung in diesem Fall eher in einem Defekt des Ventils begründet sein könnte, was unbedingt zu einer entsprechenden Wartungsmaßnahme führen müsste.

### Glossar

### Fluidischer Antrieb eines Ventils

Man spricht von einem fluidisch angetriebenen Ventil, wenn die Antriebsstange des Ventils von einer Membran bewegt wird, die durch ein Fluid, typischerweise Druckluft, mit Druck beaufschlagt und dadurch positioniert wird.

### Hub-Druck-Kurve

Die Hub-Druck-Kurve eines Ventils bzw. eines Teilhubtests gibt die Position des Ventilglieds, anders gesagt: den Hub, in Abhängigkeit vom Druck im Antriebsfluid des fluidisch angetriebenen Ventils an.

### Partial Stroke Test: s. Teilhubtest

### PST: s. Teilhubtest

### Relation

Unter einer Relation wird hier eine mathematische Beziehung verstanden, die im Gegensatz zu einer Funktion (bzw. Abbildung) nicht bijektiv ist. Hier sind insbesondere Relationen von Interesse, die linkstotal sind. Das heißt, dass bei einer Relation zwischen den Mengen A und B zu jedem Element aus A mindestens ein Element aus B existiert, aber nicht notwendigerweise genau eines, sondern durchaus auch mehrere.

### Sicherheitsventil

Als Sicherheitsventile werden hier Stellarmaturen mit einer Auf/Zu-Arbeitsweise und sicherheitsrelevanter Anwendung bezeichnet. Stellarmaturen bestehen aus einem - typischerweise fluidischen - Antrieb und einem beweglichen Ventilglied und dienen zum Regulieren eines Fluidstromes. Die Art der Ventile können sowohl Drehventile als auch Hubventile sein. Im Bereich sicherheitsrelevanter Armaturen werden in der Regel einfachwirkende Pneumatikantriebe verwendet. Die von Federkräften einseitig vorgespannten Antriebe verfahren eigenständig in eine sichere Position, wenn der Antrieb entlüftet wird, also die Druckluft aus der Kammer des Antriebes entweicht. Dies geschieht z.B. dann, wenn ein Strom-Druck(I/P)-Wandler oder ein Magnetventil nicht mehr bestromt wird.

Bei Sicherheitsarmaturen ist häufig das Sicherheitsventil im normalen Betrieb offen, und im Fehlerfall (z.B. Stromausfall) schließt das Sicherheitsventil eigenständig. Die Druckluft wirkt immer gegen die Federkraft. Entlüftet man nun den Antrieb, beginnt das Ventil sich zu schließen, da die Federkräfte freigesetzt werden. In der Hub-Druck-Kurve bewirkt diese Konfiguration, dass sich das Ventil gegen die Haftreibung losreißt, wenn der Druck im Antrieb reduziert wird.

Die Sicherheitsstellung kann auch stromlos offen sein (Antrieb entlüftet) und bestromt geschlossen (Antrieb belüftet).

### Stick-Slip-Effekte

Der Stick-Slip-Effekt (von engl. stick "haften" und slip "gleiten"), auch als Haftgleiteffekt oder (selbsterregte) Reibschwingung bekannt, bezeichnet das Ruckgleiten von gegeneinander bewegten Festkörpern, also das periodisch abwechselnde Haften und Gleiten. Bekannte Beispiele sind Tafelkreiden auf Schreibtafeln, knarrende Türen, quietschende Bremsen, ratternde Scheibenwischer und die über einen Latex-Luftballon stotternde oder den Rand eines Trinkglases in Schwingung versetzende, nasse Fingerkuppe.

### Teilhubtest (Partial Stroke Test, PST)

Um den sicheren Betrieb einer Armatur zu gewährleisten, wird regelmäßig bzw. zyklisch getestet, ob sich das Stellglied auch bewegt. Bei diesen Tests ist es nicht gewünscht, dass die Armatur vollständig in die Sicherheitsstellung verfährt, um den laufenden Betrieb nicht zu stören. Bei einem Teilhubtest wird das Stellglied nur soweit verfahren, wie erforderlich ist, um sicherzustellen, dass das Stellglied einen Teil der Strecke verfährt, ohne den Prozess der Anlage maßgeblich zu beeinflussen. Dabei wird auch getestet, ob sich das Stellglied überhaupt noch von seiner Position löst bzw. losbricht. Das Stellglied fährt nach dem Teilhubtest wieder in seine Ausgangsposition zurück. Mit diesem Test kann die grundlegende Bewegbarkeit des Stellgliedes geprüft werden.

### Ventilglied

Das Ventilglied, ist dasjenige Element, das das Ventil schließt, wenn es auf den Ventilsitz gepresst wird.

### Bezugszeichen

- 210: Soll-Wert des Hubs
- 220: Ist-Wert des Drucks
- 230: Ist-Wert des Hubs
- 240: Losbrechdruck
- 250: Reserve des Losbrechdrucks
- 310: Losbrech-Reserve
- 320: Schließdruck-Reserve
- 330: zwei Punkte zur Bestimmung der Interpolationsgerade
- 340: Interpolationsgerade
- 350: Druckwert bei Hub = 0
- 360: 90% des Hubs, Ende des PST

### zitierte Literatur

### zitierte Patentliteratur

WO 2009/013205 A1
DE 10 2011 052 901 A1
DE 10 2018 103 324 B3
US2002/0145515

## Patentansprüche

1. Verfahren zum Festlegen von Abbruchkriterien für einen Teilhubtest an einem fluidisch angetriebenen Sicherheitsventil mit einem Ventilglied und einer Feder-Rückstellung;
wobei das Ventilglied bei einem vollständigen Abfall des Drucks des Antriebsfluids durch die Feder-Rückstellung in eine Sicherheitsstellung bewegt werden soll;
wobei das Sicherheitsventil Mittel zum Bestimmen des Drucks des Antriebsfluids aufweist; wobei der Druck des Antriebsfluids gegen die Feder wirkt:
wobei das Sicherheitsventil Mittel zum Bestimmen der Stellung des Ventilglieds aufweist;
wobei das Sicherheitsventil eine Stellungsregelung aufweist, die beim Teilhubtest verwendet wird, und
wobei diese Stellungsregelung eine Proportional-Regelung mit einer Regelabweichung ist, wobei das Verfahren die folgenden Schritte umfasst:
ein erster Teilhubtest wird an dem Sicherheitsventil mittels Variation des Drucks im Antriebsfluid durchgeführt;
wobei der erste Teilhubtest zu einem Zeitpunkt durchgeführt wird, an dem das Sicherheitsventil funktionsfähig ist;
zumindest die Stellung des Ventilglieds wird während des ersten Teilhubtests aufgezeichnet;
aus den Aufzeichnungen wird eine erste Relation abgeleitet, die die Stellung des Ventilglieds und/oder die Zeit und/oder den Druck des Antriebsfluids und/oder einen weiteren, während des ersten Teilhubtests aufgezeichneten Parameter zueinander in Beziehung setzt; wobei als erste Relation die Summe aus der Soll-Kurve für die Stellungsregelung des Ventilglieds und der Regelabweichung verwendet wird;
diese Relation wird als Referenzkurve für dieses Sicherheitsventil im funktionsfähigen Zustand definiert und gespeichert;
mindestens eine zweite Relation wird definiert, die einen vorgegebenen Abstand zur Referenzkurve aufweist;
als Abbruchkriterium für einen später durchzuführenden, wiederholten Teilhubtest an demselben Ventil wird Folgendes festgelegt:
wird der wiederholte Teilhubtest an demselben Ventil durchgeführt; und
werden dabei die gleichen Daten aufgezeichnet; und
wird aus den Daten auf die gleiche Weise wie bei der Referenzkurve eine dritte Relation abgeleitet,
so gilt der wiederholte Teilhubtest als nicht bestanden, wenn die dritte Relation an mindestens einem Punkt einen größeren Abstand zur Referenzkurve hat als die zweite Relation.

2. Verfahren nach dem vorhergehenden Anspruch,
**dadurch gekennzeichnet,**
**dass** die mindestens eine zweite Relation einen Abstand von 2% zur Referenzkurve aufweist; wobei dieser Abstand nach oben und nach unten gilt.

3. Verfahren nach Anspruch 1,
**dadurch gekennzeichnet,**
**dass** die mindestens eine zweite Relation für verschiedene Stellungen des Ventilglieds unterschiedliche Abstände zur Referenzkurve aufweist.

4. Verfahren nach dem unmittelbar vorhergehenden Anspruch,
**dadurch gekennzeichnet,**
**dass** die unterschiedlichen Abstände der mindestens einen zweiten Relation zur Referenzkurve jeweils für unterschiedliche Bereiche des Bewegungsverlaufs des Ventilglieds bei einem Teilhubtest gelten.

5. Verfahren nach dem unmittelbar vorhergehenden Anspruch,
**dadurch gekennzeichnet,**
**dass** die unterschiedlichen Abstände und Bereiche derart festgelegt werden, dass Stick-Slip-Effekte berücksichtigt werden.

6. Verfahren nach Anspruch 1,
**dadurch gekennzeichnet,**
**dass** die mindestens eine zweite Relation nach oben und nach unten jeweils unterschiedliche Abstände zur Referenzkurve aufweist.

7. Verfahren nach einem der vorhergehenden Ansprüche,
**dadurch gekennzeichnet,**
**dass** die Abstände der zweiten Relation zur Referenzkurve in Abhängigkeit von aktuellen Bedingungen am Ventil und/oder an der Anlage zum Zeitpunkt der Durchführung des Teilhubtests dynamisch festgelegt werden.

8. Verfahren nach einem der vorhergehenden Ansprüche,
**dadurch gekennzeichnet,**
**dass** der Teilhubtest zusätzlich als nicht bestanden gilt, wenn der Druck im Antriebsfluid einen vorgegebenen Wert unterschreitet.

9. Verfahren zum Bestimmen der Funktionsfähigkeit eines fluidisch angetriebenen Sicherheitsventils mit einem Ventilglied und einer Feder-Rückstellung;
wobei das Ventilglied bei einem vollständigen Abfall des Drucks des Antriebsfluids durch die Feder-Rückstellung in eine Sicherheitsstellung bewegt werden soll;
wobei das Sicherheitsventil Mittel zum Bestimmen des Drucks des Antriebsfluid aufweist; wobei der Druck des Antriebsfluids gegen die Feder wirkt;
wobei das Sicherheitsventil Mittel zum Bestimmen der Stellung des Ventilglieds aufweist;
wobei das Verfahren die folgenden Schritte umfasst:
ein Teilhubtest wird an dem Sicherheitsventil durchgeführt;
ein Verfahren gemäß einem der vorhergehenden Ansprüche wurde zu einem früheren Zeitpunkt an demselben Sicherheitsventil durchgeführt;
anhand der mit diesem Verfahren gemäß einem der vorhergehenden Ansprüche definierten Abbruchkriterien für dieses Ventil wird entschieden, ob das Ventil den Teilhubtest bestanden oder nicht bestanden hat und weiterhin als funktionsfähig eingestuft werden kann oder nicht.

10. Verfahren nach einem der vorhergehenden Ansprüche, wobei die Verfahrensschritte als Programmcode formuliert sind, mit dem das Verfahren auf mindestens einem Computer ablaufen kann.

11. Computerprogramm,
**dadurch gekennzeichnet,**
**dass** es ausführbare Instruktionen beinhaltet, welche bei Ausführung auf einer Recheneinheit, einem Mikrocontroller, DSP, FPGA oder Computer oder auf einer Mehrzahl davon in einem Netzwerk das Verfahren nach einem der vorhergehenden Verfahrensansprüche 1 bis 10 ausführt.

12. Computerprogramm mit Programmcode-Mitteln, um ein Verfahren gemäß einem der vorhergehenden Verfahrensansprüche 1 bis 10 durchzuführen, wenn das Computerprogramm auf einer Recheneinheit, einem Mikrocontroller, DSP, FPGA oder Computer oder auf einer Mehrzahl davon in einem Netzwerk ausgeführt wird.

13. Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das Verfahren nach einem der vorhergehenden Verfahrensansprüche 1 bis 10 ausführt.

14. Computerprogramm-Produkt mit auf einem maschinenlesbaren Träger gespeicherten Programmcode-Mitteln, um alle Schritte gemäß einem der vorhergehenden Verfahrensansprüche 1 bis 10 durchzuführen, wenn das Programm auf einer Recheneinheit, einem Mikrocontroller, DSP, FPGA oder Computer oder auf einer Mehrzahl davon in einem Netzwerk ausgeführt wird.

15. Moduliertes Datensignal, welches von einer Recheneinheit, einem Mikrocontroller, DSP, FPGA oder Computer oder von einer Mehrzahl davon in einem Netzwerk ausführbare Instruktionen zum Ausführen eines Verfahrens nach einem der vorhergehenden Verfahrensansprüche 1 bis 10 enthält.

## Claims

1. Method for establishing termination criteria for a partial stroke test of a fluidically driven safety valve having a valve member and a spring return;
wherein the valve member is intended to be moved into a safety position by the spring return in case of a complete loss of pressure of the drive fluid;
wherein the safety valve has means for determining the pressure of the drive fluid;
wherein the pressure of the drive fluid acts against the spring;
wherein the safety valve has means for determining the position of the valve member;
wherein the valve has a position control which is used during the partial stroke test, and
wherein said position control is a proportional control with a control deviation,
wherein the method comprises the following steps:
a first partial stroke test of the safety valve is performed by variation of the pressure in the drive fluid;
wherein the first partial stroke test is performed at a point in time at which the safety valve is operable;
at least the position of the valve member is recorded during the first partial stroke test;
a first relation is derived from the recorded data, which puts the position of the valve member and/or the time and/or the pressure of the drive fluid and/or a further parameter recorded during the first partial stroke test in relation to one another;
wherein the sum of the target curve for the position control of the valve member and the control deviation is used as first relation.
this relation is defined as reference curve for this safety valve while operable and saved;
at least one second relation having a predetermined distance from the reference curve is defined;
the following is established as termination criterion for a repeated partial stroke test of the same valve to be performed at a later time:
if the repeated partial stroke test is performed at the same valve; and
if the same data is recorded thereby; and
if a third relation is determined from said data in the same manner as the reference curve,
then the repeated partial stroke test is considered failed if the third relation has a greater distance to the reference curve than the second relation at at least one point.

2. Method according to the preceding claim,
**characterized in that**
the at least one second relation has a distance of 2% to the reference curve;
wherein this distance applies upwards and downwards.

3. Method according to claim 1,
**characterized in that**
the at least one second relation has different distances to the reference curve for different positions of the valve member.

4. Method according to the immediately preceding claim,
**characterized in that**
the different distances of the at least one second relation to the reference curve respectively apply to different ranges of the movement of the valve member during a partial stroke test.

5. Method according to the immediately preceding claim,
**characterized in that**
the different distances and ranges are determined such that stick-slip effects are taken into account.

6. Method according to claim 1,
**characterized in that**
the at least one second relation has different respective upward and downward distances to the reference curve.

7. Method according to any one of the preceding claims,
**characterized in that**
the distances of the second relation to the reference curve are dynamically determined depending on current conditions at the valve and/or the plant at the time at which the partial stroke test is performed.

8. Method according to any one of the preceding claims,
**characterized in that**
the partial stroke test is additionally considered failed if the pressure in the drive fluid falls below a predetermined value.

9. Method for determining the operability of a fluidically driven safety valve having a valve member and a spring return;
wherein the valve member is intended to be moved into a safety position by the spring return in case of a complete loss of pressure of the drive fluid;
wherein the safety valve has means for determining the pressure of the drive fluid;
wherein the pressure of the drive fluid acts against the spring;
wherein the safety valve has means for determining the position of the valve member;
wherein the method comprises the following steps:
a partial stroke test is performed at the safety valve;
a method according to one of the preceding claims was performed on the same safety valve at a previous point in time;
based on the termination criteria defined for this valve by this method according to any one of the preceding claims, it is decided whether or not the valve has passed the partial stroke test and whether or not it is still to be considered operable.

10. Method according to any one of the preceding claims, wherein the method steps are formulated as program code, with which the method is performable on at least one computer.

11. Computer program,
**characterized in that**
it comprises executable instructions which perform the method according to any one of the preceding method claims 1 to 10 when executed on a processing unit, a microcontroller, DSP, FPGA or computer or a plurality thereof in a network.

12. Computer program having program code means for performing a method according to any one of the preceding method claims 1 to 10 if the computer program is executed on a processing unit, a microcontroller, DSP, FPGA or computer or a plurality thereof in a network.

13. Data storage medium, on which a data structure is stored that performs the method according to any one of the preceding method claims 1 to 10 after being loaded into a working and/or main memory of a processing unit, a microcontroller, DSP, FPGA or computer or a plurality thereof in a network.

14. Computer program product having program code means stored on a machine-readable storage medium for performing all steps according to any one of the preceding method claims 1 to 10 if the program is executed on a processing unit, a microcontroller, DSP, FPGA or computer or a plurality thereof in a network.

15. Modulated data signal containing instructions executable by a processing unit, a microcontroller, DSP, FPGA or computer or a plurality thereof in a network for performing a method according to any one of the preceding method claims 1 to 10.

## Revendications

1. Procédé de définition de critères d'abandon pour un test de course partielle sur une soupape de sécurité actionnée par un fluide, comprenant un élément de soupape et un rappel à ressort ;
dans lequel l'élément de soupape doit être déplacé vers une position de sécurité lors d'une chute complète de la pression du fluide d'entraînement par le rappel à ressort ;
dans lequel la soupape de sécurité comprend des moyens pour déterminer la pression du fluide d'entraînement ;
dans lequel la pression du fluide d'entraînement agit contre le ressort ;
dans lequel la soupape de sécurité comprend des moyens pour déterminer la position de l'élément de soupape ;
dans lequel la soupape de sécurité comprend un contrôle de position utilisé dans le test de course partielle, et
dans lequel ce contrôle de position est un contrôle proportionnel avec un écart de réglage,
dans lequel le procédé comprend les étapes suivantes :
un premier test de course partielle est effectué sur la soupape de sécurité en faisant varier la pression dans le fluide d'entraînement ;
dans lequel le premier test de course partielle est effectué à un moment où la soupape de sécurité est opérationnelle ;
au moins la position de l'élément de soupape est enregistrée pendant le premier test de course partielle ;
on déduit des enregistrements une première relation qui met en relation la position de l'élément de soupape et/ou le temps et/ou la pression du fluide d'entraînement et/ou un autre paramètre enregistré pendant le premier test de course partielle ;
dans laquelle la somme de la courbe de consigne pour le contrôle de position de l'élément de soupape et de l'écart de réglage est utilisée comme première relation ;
cette relation est définie et stockée comme courbe de référence pour cette soupape de sécurité en état de fonctionnement ;
au moins une deuxième relation est définie, qui comprend une distance prédéterminée par rapport à la courbe de référence ;
le critère d'abandon pour un test de course partielle répété sur la même soupape, à effectuer ultérieurement, est défini comme suit :
le test de course partielle répété est effectué sur la même soupape ; et
les mêmes données sont enregistrées ; et
une troisième relation est dérivée des données de la même manière que pour la courbe de référence,
le test de course partielle répété est considéré comme un échec si la troisième relation est plus éloignée de la courbe de référence que la deuxième relation en au moins un point.

2. Procédé selon la revendication précédente,
**caractérisé en ce**
**que** ladite au moins une deuxième relation comprend une distance de 2% par rapport à la courbe de référence ;
dans lequel cette distance s'applique vers le haut et vers le bas.

3. Procédé selon la revendication 1,
**caractérisé en ce**
**que** ladite au moins une deuxième relation comprend des distances différentes par rapport à la courbe de référence pour différentes positions de l'élément de soupape.

4. Procédé selon la revendication immédiatement précédente,
**caractérisé en ce**
**que** les distances différentes de ladite au moins une deuxième relation par rapport à la courbe de référence s'appliquent respectivement à des zones différentes de la courbe de mouvement de l'élément de soupape lors d'un test de course partielle.

5. Procédé selon la revendication immédiatement précédente,
**caractérisé en ce**
**que** les différentes distances et zones sont déterminées de manière à prendre en compte les effets de stick-slip.

6. Procédé selon la revendication 1,
**caractérisé en ce**
**que** ladite au moins une deuxième relation comprend des distances respectives différentes vers le haut et vers le bas par rapport à la courbe de référence.

7. Procédé selon l'une des revendications précédentes,
**caractérisé en ce**
**que** les distances de la deuxième relation par rapport à la courbe de référence sont déterminées de manière dynamique en fonction des conditions actuelles sur la soupape et/ou sur l'installation au moment de l'exécution du test de course partielle.

8. Procédé selon l'une des revendications précédentes,
**caractérisé en ce**
**que** le test de course partielle est en outre considéré comme non réussi si la pression dans le fluide d'entraînement est inférieure à une valeur prédéfinie.

9. Procédé de détermination du fonctionnement d'une soupape de sécurité actionnée par un fluide, comprenant un élément de soupape et un rappel à ressort ;
dans lequel l'élément de soupape doit être déplacé dans une position de sécurité par le rappel à ressort en cas de chute complète de la pression du fluide d'entraînement ;
dans lequel la soupape de sécurité comprend des moyens pour déterminer la pression du fluide d'entraînement ;
dans lequel la pression du fluide d'entraînement agit contre le ressort ;
dans lequel la soupape de sécurité comprend des moyens pour déterminer la position de l'élément de soupape ;
dans lequel le procédé comprend les étapes suivantes :
un test de course partielle est effectué sur la soupape de sécurité ;
un procédé selon l'une quelconque des revendications précédentes a été mis en oeuvre précédemment sur la même soupape de sécurité ;
à partir des critères d'abandon pour cette soupape définis par ce procédé selon l'une quelconque des revendications précédentes, on décide si la soupape a réussi ou échoué au test de course partielle et peut continuer à être considérée comme fonctionnelle ou non.

10. Procédé selon l'une quelconque des revendications précédentes, dans lequel les étapes du procédé sont formulées sous la forme d'un code de programme permettant à exécuter le procédé sur au moins un ordinateur.

11. Programme d'ordinateur,
**caractérisé en ce**
**qu'**il comprend des instructions exécutables qui, lorsqu'elles sont exécutées sur une unité de calcul, un microcontrôleur, un DSP, un FPGA ou un ordinateur ou sur une pluralité d'entre eux dans un réseau, exécutent le procédé selon l'une quelconque des revendications 1 à 10 du procédé précédent.

12. Programme d'ordinateur comprenant des moyens de code de programme pour exécuter un procédé selon l'une quelconque des revendications de procédé 1 à 10 précédentes lorsque le programme d'ordinateur est exécuté sur une unité de traitement, un microcontrôleur, un DSP, un FPGA ou un ordinateur ou sur une pluralité de ceux-ci dans un réseau.

13. Support de données sur lequel est stockée une structure de données qui, après avoir été chargée dans une mémoire de travail et/ou une mémoire principale d'une unité de calcul, d'un microcontrôleur, d'un DSP, d'un FPGA ou d'un ordinateur ou d'une pluralité de ceux-ci dans un réseau, exécute le procédé selon l'une quelconque des revendications de procédé précédentes 1 à 10.

14. Produit de programme d'ordinateur comprenant des moyens de code de programme stockés sur un support lisible par machine pour exécuter toutes les étapes selon l'une quelconque des revendications de procédé précédentes 1 à 10 lorsque le programme est exécuté sur une unité de traitement, un microcontrôleur, un DSP, un FPGA ou un ordinateur ou sur une pluralité de ceux-ci dans un réseau.

15. Un signal de données modulées contenant des instructions exécutables par une unité de calcul, un microcontrôleur, un DSP, un FPGA ou un ordinateur, ou par une pluralité d'entre eux, dans un réseau, pour exécuter un procédé selon l'une quelconque des revendications de procédé précédentes 1 à 10.
